# EUROPÄISCHE PATENTSCHRIFT

(11) **EP 1 396 247 B1**
(45) Veröffentlichungstag und Bekanntmachung des Hinweises auf die Patenterteilung: **07.12.2005**
(21) Anmeldenummer: 03019442.7
(22) Anmeldetag: 28.08.2003
(51) Int. Cl.: A61H 3/06

(54) **Tragbare Mobilitätshilfe für sehbehinderte Personen**
Portable mobility aid for visually impaired persons
Dispositif portable d'aide à la mobilité pour les malvoyants

(30) Priorität: 09.09.2002 DE 20214852 U
(43) Veröffentlichungstag der Anmeldung: 10.03.2004
(73) Patentinhaber: Grooten, Hubert, 6369 EM Simpelveld (NL)
(72) Erfinder: Grooten, Hubert, 6369 EM Simpelveld (NL)
(74) Vertreter: Gesthuysen, von Rohr & Eggert

(56) Entgegenhaltungen:
- EP-A- 0 669 119
- DE-A- 19 815 073
- DE-A- 19 850 056
- DE-U- 29 502 628
- GB-A- 1 604 304

## Beschreibung

Die Erfindung betrifft eine tragbare Mobilitätshilfe für sehbehinderte Personen nach dem Oberbegriff von Anspruch 1.

Das Zurücklegen einer Wegstrecke von einem Ausgangspunkt zu einem Zielpunkt ist für sehbehinderte Personen mit vielfältigen Schwierigkeiten verbunden. Die eine Schwierigkeit besteht darin, daß die "globale" Position der sehbehinderten Person insbesondere bei unbekannter Umgebung nur schwer feststellbar ist, so daß grundsätzlich die Gefahr besteht, daß ein falscher Weg eingeschlagen wird. Weiter läuft die sehbehinderte Person während der gesamten Wegstrecke Gefahr, mit beweglichen oder unbeweglichen Hindernissen in ihrer unmittelbaren Umgebung zu kollidieren.

Die in Rede stehenden Mobilitätshilfen bieten eine Unterstützung für sehbehinderte Personen zur Vermeidung der oben genannten Gefahren. Eine Mobilitätshilfe, die ein Meßsystem basierend auf Ultraschall- bzw. Infrarotsignalen aufweist, ist aus dem Stand der Technik bekannt (DE 295 02 628 U1). Hier wird ein Blindenstock vorgeschlagen, der einen Ultraschallsender und -empfänger sowie in weiterer Ausgestaltung zusätzlich einen Infrarotsender und -empfänger aufweist. Mit diesem Meßsystem werden Hindernisse detektiert und entsprechende Daten an die sehbehinderte Person weitergegeben. Die Übermittlung dieser Daten erfolgt über ein akustisches Signal, vorzugsweise eines Tons, dessen Höhe beispielsweise Aufschluß über den Abstand vom jeweiligen Hindernis geben kann. Es ist hier erkannt worden, daß es sinnvoll sein kann, zwei verschiedenartige Sensorsysteme, nämlich einen Ultraschallsensor einerseits und einen Infrarotsensor andererseits, einzusetzen, um eine umfassende Information an die sehbehinderte Person liefern zu können.

Eine bekannte Mobilitätshilfe, die auch eine Unterstützung der sehbehinderten Person zur Vermeidung von Kollisionen darstellt, wird in der DE 299 02 241 U1 offenbart. Hier wird eine Lasermeßeinrichtung beschrieben, die eine besonders gezielte und gleichzeitig genaue Entfernungsmessung ermöglicht. Im Falle einer drohenden Kollision wird ein Warnsignal ausgelöst, das entweder als akustisches oder als taktiles Signal ausgebildet sein kann.

Eine weitere bekannte Mobilitätshilfe beinhaltet einerseits ein System zur Ermittlung der globalen Position der sehbehinderten Person und gleichzeitig ein System zur Kollisionsvermeidung in der unmittelbaren Umgebung (DE 198 50 056 A1). Als technologische Grundlage für die globale Positionsmessung wird hier auf die Anwendung des bekannten Global Positioning Systems (GPS) hingewiesen und insbesondere die Anwendung eines GSM- oder UMTSnetzgestützten Orientierungssystems vorgeschlagen. Basierend auf einer elektronisch gespeicherten Karte wird die zurückzulegende Wegstrecke geplant. Das "Finetuning" des Wegs im Hinblick auf die unmittelbare Umgebung der sehbehinderten Person wird dann auf der Basis eines Radar- oder Infrarotsensors gewährleistet. Auch die Anwendung von Ultraschallsensoren ist hier vorgesehen. Als Mensch-Maschine-Schnittstelle wird eine Sprachein- und ausgabe vorgeschlagen. Auch bei dieser Mobilitätshilfe werden zwei unterschiedliche Sensorsysteme derart kombiniert, daß die sehbehinderte Person eine möglichst umfassende Information erhält.

Während die letztgenannte Mobilitätshilfe mit leistungsfähigen Sensorsystemen ausgerüstet ist, die zuverlässige Informationen an die sehbehinderten Personen liefern, wird die nur geringe Flexibilität dieses Systems der Situation sehbehinderter Personen nicht gerecht. Es ist nämlich zu berücksichtigen, daß bis auf wenige Ausnahmen keine Sehbehinderung der anderen gleicht. Die Störung des Sehvermögens ist grundsätzlich unterschiedlich ausgeprägt je nachdem, ob eine Schädigung der Linse (grauer Star), ob eine Binde- und Hornhauterkrankung oder ob eine Sehnervschädigung (grüner Star) vorliegt. Daher ist für jeden Grad der Störung des Sehvermögens eine Mobilitätshilfe mit einem individuellen Funktionsumfang und im Ergebnis mit einer unterschiedlichen Kombination von Sensorsystemen optimal. Dies gilt insbesondere auch für die Mensch-Maschine-Schnittstelle einer Mobilitätshilfe, die nicht nur der Sehbehinderung, sondern auch dem persönlichen Empfinden der sehbehinderten Person angepaßt sein muß.

Im Ergebnis ist festzustellen, daß die bekannten Systeme einerseits für bestimmte Anwendungsfälle "überdimensioniert" und damit bei weitem zu teuer sind und andererseits für andere Anwendungsfälle keine hinreichenden Informationen liefern.

Einen Lösungsansatz liefert die bekannte, den Ausgangspunkt der Erfindung bildende Mobilitätshilfe (EP 0 669 119 A1), die mit einem Sensor, der ein Radarmodul sein kann, ausgestattet ist. Die Mobilitätshilfe ist um einen weiteren, vergleichbaren Sensor erweiterbar, um der sehbehinderten Person zusätzliche Informationen über seine Umgebung zu geben. Die Steuerung dieser Mobilitätshilfe ist genau auf diese beiden Sensoren ausgelegt, so daß die resultierende Erweiterbarkeit eingeschränkt ist. Es handelt sich gewissermaßen um eine starres System.

Der vorliegenden Erfindung liegt die Problemstellung zugrunde, die bekannte Mobilitätshilfe derart auszugestalten und weiterzubilden, daß die universelle Anwendbarkeit mit minimalem Aufwand gesteigert wird.

Die zuvor aufgezeigte Problemstellung wird zunächst durch eine Mobilitätshilfe gemäß dem Oberbegriff von Anspruch 1 mit den Merkmalen des kennzeichnenden Teils von Anspruch 1 gelöst.

Wesentlich ist zunächst, daß die Steuereinheit der Mobilitätshilfe mindestens ein Funktionsmodul aufweist und daß der Funktionsumfang der Mobilitätshilfe durch das Entfernen oder durch den Austausch eines Funktionsmoduls oder mehrerer Funktionsmodule der Steuereinheit auf die gegebenen Anforderungen einstellbar bzw. konfigurierbar ist. Hierfür ist es vorgesehen, daß das Funktionsmodul oder die Funktionsmodule entsprechend ausgestaltete mechanische und elektrische Schnittstellen aufweisen. Beispielsweise weist die Steuereinheit ein Funktionsmodul "GPS-Orientierungssystem" und ein weiteres Funktionsmodul "Ultraschallsensor" auf. Dann kann, wenn die unmittelbare Umgebung der sehbehinderten Person zukünftig genauer als bisher vermessen werden soll, das Funktionsmodul "Ultraschallsensor" durch ein weiteres Funktionsmodul "Lasermeßeinrichtung" ersetzt werden. Hiermit ist es denkbar, daß sich die sehbehinderte Person je nach Sehbehinderung, nach persönlicher Neigung sowie nach finanziellen Möglichkeiten eine individuelle Mobilitätshilfe zusammenstellt.

Eine besondere Benutzerfreundlichkeit des oben genannten modularen Konzepts einer Mobilitätshilfe ergibt sich daraus, daß ein mechanischer Austausch des Funktionsmoduls oder eines der Funktionsmodule durch ein weiteres Funktionsmodul nach Art des aus dem PC-Bereich bekannten Plug&Play-Prinzips eine automatische steuerungstechnische Anpassung der Möbilitätshilfe bewirkt.

Die Steuereinheit der Mobilitätshilfe weist nicht eine eindeutig bestimmte Anzahl von Funktionsmodulen auf, sondern ist nach Bedarf um weitere Funktionsmodule erweiterbar. Nach dem oben Gesagten erweitert oder reduziert sich entsprechend der Funktionsumfang der Mobilitätshilfe. Hiermit ist es beispielsweise möglich, daß eine sehbehinderte Person zunächst eine "abgespeckte" Version der gewünschten Mobilitätshilfe erwirbt und erst, wenn weitere finanzielle Möglichkeiten gegeben sind, ein zusätzliches Funktionsmodul einsetzt.

Es gibt natürlich eine Vielzahl von Möglichkeiten, die Lehre der Erfindung auszugestalten und weiterzubilden. Dazu darf auf die Unteransprüche verwiesen werden.

Eine optimale Akzeptanz der Mobilitätshilfe ist dann zu erwarten, wenn nach besonders bevorzugter Ausgestaltung die Mobilitätshilfe als Blindenstock mit Handgriff und einem bei Benutzung im wesentlichen nach unten abragenden länglichen Abschnitt ausgestaltet ist und wenn die Steuereinheit zumindest teilweise in diesem Blindenstock untergebracht ist.

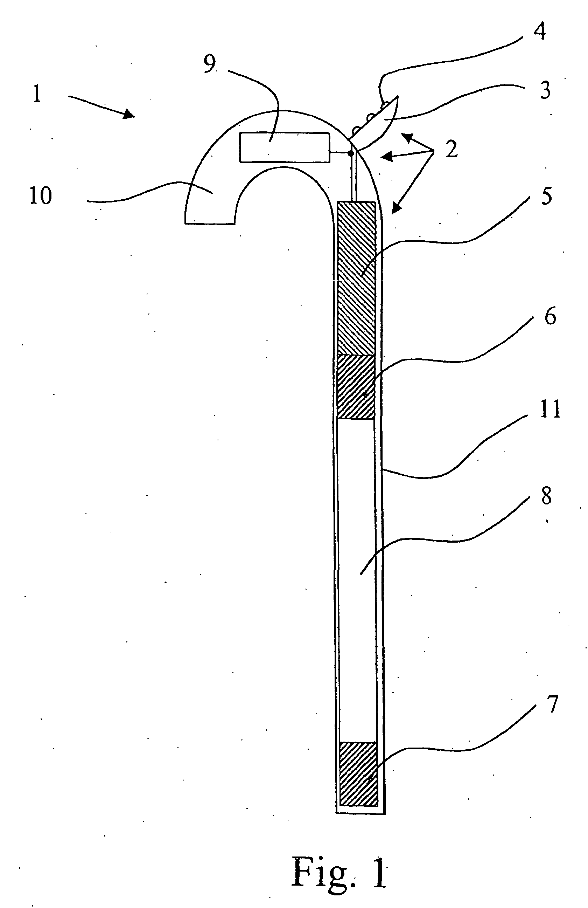

In der lediglich ein Ausführungsbeispiel darstellenden Zeichnung zeigt die einzige Figur eine schematische Darstellung der erfindungsgemäßen Mobilitätshilfe. In der Zeichnung ist die Mobilitätshilfe 1 in der Ausgestaltung eines Blindenstocks dargestellt. Es ist eine elektronische Steuereinheit 2 vorgesehen, die Funktionen zur Navigation und/oder zur Kollisionsvermeidung bereitstellt und eine Mensch-Maschine-Schnittstelle 3 zur Interaktion mit der sehbehinderten Person aufweist. Eine Reihe möglicher Funktionen der Steuereinheit 2, die hier in Frage kommen, wurden bereits in der Beschreibungseinleitung vorgestellt.

Die Mensch-Maschine-Schnittstelle 3 weist vorliegend lediglich Druckknöpfe 4 zur Bedienung auf. Es können aber auch, wie ebenfalls in der Beschreibungseinleitung erwähnt wurde, Sprachein- und ausgabesysteme, vorzugsweise unter Verwendung eines Kopfhörers mit Mikrophon, vorgesehen werden. Eine weitere Ausgestaltung der Mensch-Maschine-Schnittstelle 3 sieht den Austausch taktiler Informationen, insbesondere über mechanische Schwingungen, vor. Ein Beispiel hierfür ist die Integration eines vibrierenden Elements, dessen Schwingungen von der sehbehinderten Person wahrgenommen werden können.

In weiterer bevorzugter Ausgestaltung weist die Mensch-Maschine-Schnittstelle 3 eine sogenannte intelligente Brille auf, die visuelle oder taktile Signale an die sehbehinderte Person abgibt. Die intelligente Brille wird vorzugsweise von einem visuellen Sensor wie einer Kamera o. dgl. angesteuert.

Die elektronische Steuereinheit 2 weist die Funktionsmodule 5,6,7 auf, wobei ein Funktionsmodul beispielsweise ein Navigationssystem, ein Ultraschallsensor oder etwa ein Kommunikationssystem sein kann. Es kann auch vorgesehen werden, daß nur ein einziges Funktionsmodul in der Steuereinheit 2 enthalten ist. Der Funktionsumfang der Steuereinheit 2 wird dadurch bestimmt, welche Funktionsmodule die Steuereinheit 2 enthält. Jedes Funktionsmodul 5,6,7 ist mit einer Schnittstelle ausgestattet, über die das Funktionsmodul 5,6,7 mit der Steuereinheit 2 im übrigen lösbar verbunden ist. Damit kann je nach aktuellem Bedarf das Funktionsmodul 5,6,7, beispielsweise ein Ultraschallsensor, durch ein weiteres Funktionsmodul 5,6,7, beispielsweise eine Lasermeßeinrichtung, ersetzt werden.

Es darf an dieser Stelle darauf hingewiesen werden, daß die Steuereinheit 2 grundsätzlich auch Funktionen bereitstellen kann, die nicht notwendigerweise in einem Funktionsmodul 5,6,7 realisiert sind. Eine Möglichkeit besteht darin, daß die Steuereinheit 2 bestimmte Basisfunktionen, z.B. eine Kommunikationsplattform zwischen den Funktionsmodulen 5,6,7, bereitstellt, bei denen eine Austauschbarkeit nicht sinnvoll wäre.

In bevorzugter Ausgestaltung ist das Funktionsmodul 5,6,7 über seine Schnittstelle mechanisch mit der Steuereinheit 2 im übrigen lösbar verbunden. Dafür weist die Schnittstelle vorzugsweise eine Verriegelungsvorrichtung auf, die nach Art eines Schnellverschlusses ausgestaltet sein kann. Dann ist der Ein- und Ausbau des Funktionsmoduls 5,6,7 ohne weiteres ohne Werkzeug möglich.

Die Funktionsmodule 5, 6, 7 weisen vorzugsweise die gleiche Form und die gleichen Außenmaße auf. Es kann aber auch vorgesehen werden, daß jedes Funktionsmodul 5, 6, 7 unterschiedlich ausgestaltet und ggf. auch eine unterschiedliche Schnittstelle aufweist.

Besonders kompakt gestaltet sich die Steuereinheit 2, wenn die Funktionsmodule 5, 6, 7 miteinander, vorzugsweise seriell miteinander gekoppelt sind. Dies ist in der Zeichnung dargestellt. Beispielsweise könnte das oberste Funktionsmodul 5 ein GPS-Navigationssystem, das mittlere Funktionsmodul 6 ein Ultraschallsensor zur Kollisionsvermeidung und das untere Funktionsmodul 7 ein weiterer Ultraschallsensor zur Überwachung des Bodenbereichs sein. Bei einer derartigen seriellen Anordnung ist es vorteilhaft und notwendig, mindestens ein Zwischenmodul 8 vorzusehen, das lediglich die Funktion eines Abstandhalters übernimmt und ansonsten von keiner technischen Bedeutung ist.

Es ist weiter vorgesehen, daß die Steuereinheit 2 nach Bedarf um mindestens ein zusätzliches Funktionsmodul erweiterbar ist und daß damit der Funktionsumfang der Steuereinheit 2 entsprechend erweiterbar ist.

Um eine möglichst unkomplizierte Verbindung des Funktionsmoduls 5,6,7 mit der Steuereinheit 2 im übrigen zu gewährleisten, ist das Funktionsmodul 5,6,7 auch elektrisch mit der Steuereinheit 2 im übrigen lösbar verbunden. Diese elektrische Verbindung kann über elektrische Kontakte, aber auch über eine drahtlose Daten- bzw. Energieübertragung realisiert sein.

Wesentlich für eine komfortable Anwendung der Mobilitätshilfe 1 ist insbesondere, daß die Funktionsmodule 5, 6, 7 mit der Mensch-Maschine-Schnittstelle 3 derart elektrisch gekoppelt sind, daß der volle Funktionsumfang der Mobilitätshilfe 1 für die sehbehinderte Person über die Mensch-Maschine-Schnittstelle 3 nutzbar ist. Über diese zentrale Mensch-Maschine-Schnittstelle 3 ist dann der Zugriff auf die Funktionsmodule 5, 6, 7 möglich. Bei besonders einfacher Realisierung der Mobilitätshilfe 1 ist es allerdings auch denkbar, daß ein Funktionsmodul 5, 6, 7 eine eigene Mensch-Maschine-Schnittstelle aufweist und nicht mit der zentralen Mensch-Maschine-Schnittstelle 3 gekoppelt ist.

Es ist, wie weiter oben beschrieben, vorgesehen, daß sich der Funktionsumfang der Mobilitätshilfe 1 aus den einzelnen Funktionen der Funktionsmodule 5, 6, 7 ergibt. Dabei weist die Steuereinheit 2 eine Plug&Play-Funktion auf, so daß sich bei einem mechanischen Ein- und Ausbau eines Funktionsmoduls 5, 6, 7 die Steuereinheit 2 automatisch auf den resultierenden Funktionsumfang einstellt. Dazu gehört beispielsweise, daß die Mensch-Maschine-Schnittstelle 3 entsprechend automatisch um die Funktionen des hinzugefügten bzw. entfernten Funktionsmoduls 5, 6, 7 erweitert bzw. reduziert wird. Die hierfür notwendigen elektrischen oder elektronischen Anpassungen werden automatisch durchgeführt.

Es darf zusammenfassend darauf hingewiesen werden, daß die Schnittstelle des Funktionsmoduls 5,6,7 in mechanischer, in elektrischer sowie in steuerungstechnischer Hinsicht zur Verbindung des Funktionsmoduls 5,6,7 mit der Steuereinheit 2 im übrigen beitragen kann. Beispielsweise sind auch die elektronischen Komponenten (Transponder o. dgl.) zur Realisierung der Plug&Play-Funktion zumindest zum Teil als Bestandteil der Schnittstelle des Funktionsmoduls 5,6,7 zu betrachten.

Eine robuste Möglichkeit, den oben beschriebenen Modularitätsgedanken umzusetzen, besteht weiter darin, daß die Steuereinheit 2 einen Modulträger aufweist, der das Funktionsmodul 5, 6, 7 über die mechanische und elektrische Schnittstelle des Funktionsmoduls 5, 6, 7 aufnimmt. Es kann hier vorgesehen werden, daß der Modulträger verschiedene Steckplätze aufweist, in die die gewünschten Funktionsmodule 5, 6, 7 einsteckbar sind.

In weiterer besonders bevorzugter Ausgestaltung ist es vorgesehen, die Mensch-Maschine-Schnittstelle 3 ebenfalls als austauschbares Funktionsmodul auszugestalten. Dies trägt der Forderung Rechnung, daß je nach Grad der Sehbehinderung und nach persönlicher Neigung der sehbehinderten Person unterschiedliche Mensch-Maschine-Schnittstellen besonders vorteilhaft sind. Es kann aber auch sein, daß ein bestimmtes Funktionsmodul eine besondere Mensch-Maschine-Schnittstelle erfordert.

Die Steuereinheit 1 weist vorzugsweise eine Energieversorgung 9, beispielsweise ein Batterie- oder Akkumulatorsystem, auf. Die weiter bevorzugte Ausgestaltung der Energieversorgung 9 als Funktionsmodul 5,6,7 führt zu einer besonders flexiblen Variante, da die Energieversorgung 9 hiermit individuell gewählt werden kann.

Für die jeweils spezifische Funktion des Funktionsmoduls 5, 6, 7 sind eine Vielzahl von Möglichkeiten denkbar. Das in der Beschreibungseinleitung bereits erwähnte GPS-Orientierungssystem oder ein Ultraschall- oder Lasersensor sind hier zwei besonders leistungsfähige Alternativen. Um Notfallsituation beispielsweise an eine Zentrale weiterleiten zu können, ist ein SOS-Funktionsmodul vorteilhaft, das über Funk o. dgl. entsprechende Meldungen absenden kann. Weiter ist eine Blinkeinrichtung in bestimmten Umgebungen ein wichtiges Funktionsmodul, so daß die sehbehinderte Person von anderen wahrgenommen wird. Weiter ist ein "Stock-Finder"-Funktionsmodul besonders praktikabel, das akustische Signale von sich gibt, wenn die Mobilitätshilfe 1 aus dem Griffbereich der sehbehinderten Person gekommen ist. Es kann auch ein Sprach-Rekordersystem als Funktionsmodul 5, 6, 7 ausgestaltet sein, mit dem Sprachinformationen, beispielsweise Informationen über eine zurückgelegte Wegstrecke, aufgenommen werden können.

Es darf ferner darauf hingewiesen werden, daß intelligente Sensoren, die beispielsweise einen Teil der jeweiligen Meßdatenerfassung selbständig und dezentral durchführen, in besonders vorteilhafter Weise als Funktionsmodul 5,6,7 einsetzbar sind. Hierdurch läßt sich der Realisierungsaufwand der Steuereinheit 2 im übrigen erheblich reduzieren.

Schließlich kann es vorteilhaft sein, wenn ein Datenspeicher als Funktionsmodul 5,6,7 ausgestaltet ist. Dies gilt insbesondere dann, wenn der Datenspeicher Straßenkarten o. dgl. enthält, die austauschbar sein sollen.

Für besonders komplexe Hilfsfunktionen ist es in besonders bevorzugter Ausgestaltung vorgesehen, daß das Funktionsmodul 5,6,7 als selbstlernende Einheit ausgestaltet ist, die beispielsweise auf die Erkenntnisse der künstlichen Intelligenz zurückgreift. Beispiele hierfür sind intelligente Kommunikationssysteme oder intelligente Systeme zur Erfassung der aktuellen Umgebung.

In bevorzugter Ausgestaltung kann das Funktionsmodul 5,6,7 von der Steuereinheit 2 im übrigen räumlich getrennt sein. Dies eröffnet insbesondere die Möglichkeit, Standardsysteme wie Handheld-PCs als Funktionsmodul zu nutzen (für Rechen- und Anzeigefunktionen o. dgl.).

In der Zeichnung ist die Mobilitätshilfe 1 als Blindenstock mit Handgriff 10 und einem bei Benutzung im wesentlichen nach unten abragenden länglichen Abschnitt 11 ausgestaltet. Die Steuereinheit 2 ist, wie in der Figur dargestellt, teilweise im Blindenstock angeordnet. Während sich die Funktionsmodule 5, 6, 7 im Blindenstock befinden, ist die Mensch-Maschine-Schnittstelle 3 außerhalb des Blindenstocks angeordnet. Es kann allerdings auch vorgesehen werden, die gesamte Steuereinheit 2 innerhalb oder aber außerhalb des Blindenstocks vorzusehen.

Die Energieversorgung 9 der Mobilitätshilfe 1 kann in weiterer bevorzugter Ausgestaltung im Griff 10 der Mobilitätshilfe 1 vorgesehen werden. Es kann aber auch vorteilhaft sein, die Energieversorgung 9 nach Art einer Handtasche oder in einem Rucksack zu verstauen. Es ist weiter vorgesehen, die Energieversorgung 9 als Funktionsmodul 5, 6, 7 auszugestalten.

Im dargestellten Ausführungsbeispiel sind die Funktionsmodule 5,6,7 derart miteinander gekoppelt, daß ihre Austauschbarkeit gewährleistet ist. Dies läßt sich beispielsweise dadurch realisieren, daß der längliche Abschnitt 11 des Blindenstocks aufschraubbar ausgestaltet ist, so daß der Zugang zu den einzelnen Funktionsmodulen 5, 6, 7 gewährleistet ist.

Neben der Ausgestaltung der Mobilitätshilfe 1 als Blindenstock sind weitere Ausgestaltungen denkbar. Ein Beispiel hierfür ist die Ausgestaltung der Mobilitätshilfe 1 als Tragetasche, als Rucksack o. dgl.. Es kann auch vorgesehen werden, daß ein Teil der Steuereinheit 2 in einem Rucksack getragen wird, und der übrige Teil der Steuereinheit 2 in den beschriebenen Blindenstock o. dgl. integriert ist.

In weiterer bevorzugter Ausgestaltung kann die Mobilitätshilfe 1 zumindest teilweise in Bekleidungsteile integriert sein. Hierbei handelt es sich vorzugsweise um intelligente Bekleidungsteile, die bereits mit elektronischen Komponenten wie Antennen, Leiterbahnen oder Schaltkreisen etc. ausgestattet sind und entsprechende Funktionen gewährleisten. Dies führt insgesamt zu einem besonders hohen Bedien- und Tragekomfort.

## Patentansprüche

1. Tragbare Mobilitätshilfe für sehbehinderte Personen mit einer elektronischen Steuereineinheit (2), wobei die Steuereinheit (2) Funktionen zur Navigation und/oder zur Kollisionsvermeidung bereitstellt und eine Mensch-Maschine-Schnittstelle (3) zur Interaktion mit der sehbehinderten Person aufweist,
wobei die Steuereinheit (2) mindestens ein Funktionsmodul (5, 6, 7) mit einer Schnittstelle aufweist, wobei das Funktionsmodul (5, 6, 7) bzw. die Funktionsmodule (5, 6, 7) über die jeweilige Schnittstelle mit der Steuereinheit (2) im übrigen lösbar verbunden ist bzw. sind und wobei sich der Funktionsumfang der Steuereinheit (2) durch die Funktion des Funktionsmoduls bzw. durch die Funktionen der Funktionsmodule (5, 6, 7) bestimmt,
**dadurch gekennzeichnet,**
**daß** nach Bedarf das Funktionsmodul (5, 6, 7) bzw. die Funktionsmodule (5, 6, 7) jeweils durch ein weiteres Funktionsmodul (5, 6, 7) austauschbar ist bzw. sind und die Steuereinheit (2) um mindestens ein weiteres Funktionsmodul (5, 6, 7) erweiterbar ist und daß die Steuereinheit (2) eine Plug&Play-Funktion aufweist und derart ausgestaltet ist, daß beim mechanischen Ein- bzw. Ausbau des Funktionsmoduls (5, 6, 7) bzw. eines der Funktionsmodule (5, 6, 7) die Plug&Play-Funktion eine automatische Erweiterung bzw. Reduzierung der Mensch-Maschine-Schnittstelle (3) um die Funktion des jeweils hinzugefügten bzw. entfernten Funktionsmoduls (5, 6, 7) gewährleistet.

2. Mobilitätshilfe nach Anspruch 1, **dadurch gekennzeichnet, daß** das Funktionsmodul (5, 6, 7) über seine Schnittstelle mechanisch mit der Steuereinheit (2) im übrigen lösbar verbunden ist.

3. Mobilitätshilfe nach Anspruch 1 oder 2, **dadurch gekennzeichnet, daß** die Schnittstelle des Funktionsmoduls (5,6,7) eine mechanische Verriegelungsvorrichtung, vorzugsweise nach Art eines mechanischen Schnellverschlusses, aufweist und daß der Ein- und Ausbau des Funktionsmoduls (5,6,7) vorzugsweise ohne Werkzeug erfolgen kann.

4. Mobilitätshilfe nach einem der vorhergehenden Ansprüche, **dadurch gekennzeichnet, daß** das Funktionsmodul (5,6,7) über seine Schnittstelle elektrisch mit der Steuereinheit (2) im übrigen lösbar verbunden ist, vorzugsweise, daß das Funktionsmodul (5,6,7) mit der Mensch-Maschine-Schnittstelle (3) derart elektrisch gekoppelt ist, daß der volle Funktionsumfang der Mobilitätshilfe (1) für die sehbehinderte Person über die Mensch-Maschine-Schnittstelle (3) nutzbar ist.

5. Mobilitätshilfe nach Anspruch 4, **dadurch gekennzeichnet, daß** die elektrische Verbindung zwischen dem Funktionsmodul (5, 6, 7) und der Steuereinheit (2) im übrigen über elektrische Kontakte oder über eine drahtlose Daten- bzw. Energieübertragung realisiert ist.

6. Mobilitätshilfe nach einem der vorhergehenden Ansprüche, **dadurch gekennzeichnet, daß** die Steuereinheit (2) einen Modulträger aufweist, der das Funktionsmodul (5,6,7) über die Schnittstelle des Funktionsmoduls (5,6,7) aufnimmt.

7. Mobilitätshilfe nach einem der vorhergehenden Ansprüche, **dadurch gekennzeichnet, daß** die Steuereinheit (2) eine Energieversorgung (9) aufweist und daß die Energieversorgung (9) der Steuereinheit (2) als austauschbares Funktionsmodul (5,6,7) ausgestaltet ist.

8. Mobilitätshilfe nach einem der vorhergehenden Ansprüche, **dadurch gekennzeichnet, daß** das Funktionsmodul (5,6,7) als Navigationssystem zur Erfassung der globalen Position, vorzugsweise als GPS-Navigationssystem, ausgestaltet ist, und/oder, daß das Funktionsmodul (5,6,7) als Meßsystem zur Erfassung der lokalen Umgebung, vorzugsweise als Ultraschallsensor o. dgl. vorgesehen ist.

9. Mobilitätshilfe nach einem der vorhergehenden Ansprüche, **dadurch gekennzeichnet, daß** das Funktionsmodul (5,6,7) von der Steuereinheit (2) im übrigen räumlich getrennt ist, vorzugsweise, daß das Funktionsmodul (5,6,7) als Handheld-PC o. dgl. ausgestaltet ist.

10. Mobilitätshilfe nach einem der vorhergehenden Ansprüche, daß die Mobilitätshilfe als Blindenstock mit Handgriff (10) und einem bei Benutzung im wesentlichen nach unten abragenden länglichen Abschnitt (11) ausgestaltet ist und daß die Steuereinheit (2) zumindest teilweise im oder am Blindenstock angeordnet ist.

## Claims

1. Portable mobility aid for visually impaired persons, with an electronic control unit (2), the control unit (2) providing functions for navigation and/or collision avoidance and comprising a human-machine interface (3) for interaction with the visually impaired person,
the control unit (2) having at least one function module (5, 6, 7) with an interface, the function module (5, 6, 7) or function modules (5, 6, 7) also being connected releasably to the control unit (2) via the respective interface, and the range of function of the control unit (2) being determined by the function of the function module or by the function of the function modules (5, 6, 7), **characterized in that**, depending on requirements, the function module (5, 6, 7) or function modules (5, 6, 7) can each be replaced by a further function module (5, 6, 7) and the control unit (2) can be expanded by at least one further function module (5, 6, 7), and **in that** the control unit (2) has a plug-and-play function and is configured in such a way that, upon mechanical installation or removal of the function module (5, 6, 7) or of one of the function modules (5, 6, 7), the plug-and-play function ensures an automatic expansion or reduction of the human-machine interface (3) by the function of the respectively added or removed function module (5, 6, 7).

2. Mobility aid according to Claim 1, **characterized in that** the function module (5, 6, 7) is also releasably connected to the control unit (2) via its interface by mechanical means.

3. Mobility aid according to Claim 1 or 2,
**characterized in that** the interface of the function module (5, 6, 7) has a mechanical locking device, preferably in the manner of a mechanical quick-acting closure, and **in that** the installation and removal of the function module (5, 6, 7) can preferably be done without tools.

4. Mobility aid according to one of the preceding claims, **characterized in that** the function module (5, 6, 7) is also releasably connected to the control unit (2) via its interface by electrical means, preferably **in that** the function module (5, 6, 7) is electrically coupled to the human-machine interface (3) in such a way that the full range of function of the mobility aid (1) for the visually impaired person can be exploited via the human-machine interface (3).

5. Mobility aid according to Claim 4, **characterized in that** the electrical connection between the function module (5, 6, 7) and the control unit (2) is also realized via electrical contacts or via a wireless data or power transmission.

6. Mobility aid according to one of the preceding claims, **characterized in that** the control unit (2) has a module support which receives the function module (5, 6, 7) via the interface of the function module (5, 6, 7).

7. Mobility aid according to one of the preceding claims, **characterized in that** the control unit (2) has a power supply (9), and **in that** the power supply (9) of the control unit (2) is configured as an exchangeable function module (5, 6, 7).

8. Mobility aid according to one of the preceding claims, **characterized in that** the function module (5, 6, 7) is configured as a navigation system for recording the global position, preferably as a GPS navigation system, and/or **in that** the function module (5, 6, 7) is provided as a measurement system for recording the local environment, preferably as an ultrasound sensor or the like.

9. Mobility aid according to one of the preceding claims, **characterized in that** the function module (5, 6, 7) is also spatially separate from the control unit (2), preferably **in that** the function module (5, 6, 7) is configured as a handheld PC or the like.

10. Mobility aid according to one of the preceding claims, **characterized in that** the mobility aid is configured as a cane with handgrip (10) and with an elongate section (11) extending substantially downwards during use, and **in that** the control unit (2) is arranged at least partially in or on the cane.

## Revendications

1. Dispositif portable d'aide à la mobilité pour les personnes malvoyantes comprenant une unité de commande électronique (2), l'unité de commande (2) fournissant des fonctions de navigation et/ou de prévention des collisions et présentant une interface homme/machine (3) pour l'interaction avec la personne malvoyante, l'unité de commande (2) présentant au moins un module fonctionnel (5, 6, 7) muni d'une interface, le module fonctionnel (5, 6, 7) ou les modules fonctionnels (5, 6, 7) étant relié(s) pour le reste de manière amovible à l'unité de commande (2) par le biais de l'interface correspondante et l'étendue des fonctions de l'unité de commande (2) étant déterminée par la fonction du module fonctionnel ou par les fonctions des modules fonctionnels (5, 6, 7), **caractérisé en ce que** le module fonctionnel (5, 6, 7) ou les modules fonctionnels (5, 6, 7) peuvent, suivant le besoin, être remplacé(s) par un autre module fonctionnel (5, 6, 7) et l'unité de commande (2) peut être étendue par au moins un module fonctionnel (5, 6, 7) supplémentaire et que l'unité de commande (2) présente une fonction « Plug & Play » et est configurée de telle sorte que lors de l'insertion ou du retrait mécanique du module fonctionnel (5, 6, 7) ou de l'un des modules fonctionnels (5, 6, 7), la fonction « Plug & Play » garantit une extension ou une réduction automatique de l'interface homme/machine (3) correspondant à la fonction du module fonctionnel (5, 6, 7) à chaque fois ajouté ou retiré.

2. Dispositif d'aide à la mobilité selon la revendication 1, **caractérisé en ce que** le module fonctionnel (5, 6, 7) est pour le reste relié mécaniquement de manière amovible avec l'unité de commande (2) par le biais de son interface.

3. Dispositif d'aide à la mobilité selon la revendication 1 ou 2, **caractérisé en ce que** l'interface du module fonctionnel (5, 6, 7) présente un dispositif de verrouillage mécanique, de préférence sous la forme d'un fermoir rapide mécanique, et que l'insertion et le retrait du module fonctionnel (5, 6, 7) peut s'effectuer de préférence sans outil.

4. Dispositif d'aide à la mobilité selon l'une des revendications précédentes, **caractérisé en ce que** le module fonctionnel (5, 6, 7) est pour le reste relié électriquement de manière amovible avec l'unité de commande (2) par le biais de son interface, de préférence, **en ce que** le module fonctionnel (5, 6, 7) est relié électriquement à l'interface homme/machine (3) de telle sorte que l'ensemble des fonctions du dispositif d'aide à la mobilité (1) soit utilisable par la personne malvoyante par le biais de l'interface homme/machine (3).

5. Dispositif d'aide à la mobilité selon la revendication 4, **caractérisé en ce que** la liaison électrique entre le module fonctionnel (5, 6, 7) et l'unité de commande (2) est pour le reste réalisée par le biais de contacts électriques ou par le biais d'une transmission de données ou d'énergie sans fil.

6. Dispositif d'aide à la mobilité selon l'une des revendications précédentes, **caractérisé en ce que** l'unité de commande (2) présente un support de modules qui reçoit le module fonctionnel (5, 6, 7) par le biais de l'interface du module fonctionnel (5, 6, 7).

7. Dispositif d'aide à la mobilité selon l'une des revendications précédentes, **caractérisé en ce que** l'unité de commande (2) présente une source d'énergie (9) et que la source d'énergie (9) de l'unité de commande (2) est réalisée sous la forme d'un module fonctionnel (5, 6, 7) échangeable.

8. Dispositif d'aide à la mobilité selon l'une des revendications précédentes, **caractérisé en ce que** le module fonctionnel (5, 6, 7) est réalisé sous la forme d'un système de navigation pour détecter la position globale, de préférence sous la forme d'un système de navigation GPS et/ou que le module fonctionnel (5, 6, 7) est prévu sous la forme d'un système de mesure pour détecter l'environnement local, de préférence sous la forme d'un capteur à ultrasons ou similaire.

9. Dispositif d'aide à la mobilité selon l'une des revendications précédentes, **caractérisé en ce que** le module fonctionnel (5, 6, 7) est pour le reste séparé dans l'espace de l'unité de commande (2), de préférence que le module fonctionnel (5, 6, 7) est réalisé sous la forme d'un PC portable ou similaire.

10. Dispositif d'aide à la mobilité selon l'une des revendications précédentes, **caractérisé en ce que** le dispositif d'aide à la mobilité est réalisé sous la forme d'une canne blanche d'aveugle munie d'une poignée (10) et d'une section allongée (11) dépassant essentiellement vers le bas lors de l'utilisation et que l'unité de commande (2) est au moins partiellement disposée dans ou sur la canne blanche d'aveugle.
